# EUROPEAN PATENT SPECIFICATION

(11) **EP 1 651 132 B1**
(45) Date of publication and mention of the grant of the patent: **02.03.2011**
(21) Application number: 04745017.6
(22) Date of filing: 25.07.2004
(51) Int. Cl.: A61C 8/00, A61C 13/00, A61C 13/30, A61C 5/10

(54) **KIT FOR PREPARING A DENTAL ABUTMENT**
KIT ZUR BEREITSTELLUNG VON DENTALEM AUFBAUPFOSTEN
NECESSAIRE POUR PREPARER UNE BUTEE DENTAIRE

(30) Priority: 25.07.2003 US 489965 P; 16.09.2003 US 502938 P; 21.04.2004 US 563822 P
(43) Date of publication of application: 03.05.2006
(73) Proprietor: Dadi, Michel, Tel-Aviv 62267 (IL)
(72) Inventor: Dadi, Michel, Tel-Aviv 62267 (IL)
(74) Representative: Graf Glück Habersack Kritzenberger
(86) International application number: PCT/IL2004/000677
(87) International publication number: WO 2005/009272

(56) References cited:
- US-A- 4 758 161
- US-A- 5 178 539
- US-A- 5 662 475
- US-A- 5 695 334
- US-B1- 6 358 052

## Description

### FIELD OF THE INVENTION

The present invention relates to the field of dental renewal procedures and particularly to accessories for use in making an abutment and a dental prosthesis that fits this abutment.

### BACKGROUND OF THE INVENTION

A dental prosthesis generally comprises a hollow core, surrounded by an infrastructure which, in turn, is surrounded by an esthetic veneer facing that is shaped to replicate, as nearly as possible, the missing tooth.

It is known in the art to attach a dental prosthesis to a patient's jaw using a dental implant that is embedded in the patient's jaw. Dental implants generally comprise a threaded hollow tube with an opening at one end. Surrounding the open end of the dental implant is an engaging head with a raised geometric abutment. The shape of the abutment corresponds, inversely, to the shape of the recess on the engaging head of the prosthetic tooth.

It is known in the art to facilitate the design of a dental prosthesis with an accurate model of the patient's teeth and gums formed by taking a negative impression of the patient's oral cavity and producing from the impression a positive that may be formed using a plaster cast or epoxy. A replica of the dental implant usually formed of less expensive material is embedded into the model. There are two different standard methods for fitting a dental prosthesis on to the dental implant. According to one approach, an abutment is first fitted to the dental implant and forms the base for attaching a dental prosthesis thereto, the dental prosthesis being prepared in a separate process. According to a second approach, the dental prosthesis and abutment are preformed as a single unit which is screwed on to the dental implant. To this end, there must be provided an aperture in the dental prosthesis for accommodating a screw that engages the dental implant and this must later be covered with material such as composite so as to hide the aperture.

In the first approach where the dental prosthesis is prepared separate from the abutment, a coping being a hollow shell whose internal surface matches the external contour of the abutment may be fitted on to the abutment to serve as a foundation for the dental prosthesis. Alternatively, a wax model may be produced directly on the abutment and used to cast the foundation for the dental prosthesis using standard techniques or CAD/CAM.

The conventional way to make a dental prosthesis such as a crown based on an implant is:
- to install the implant
- to adapt an abutment on the implant
- to form a crown or other prosthetic that fits the abutment

Such an approach requires that an abutment be matched at one end to the dental implant and at the other end for accommodating a prosthesis that is prepared in a separate process. The prosthesis is provided with a hollow portion that is mated to the abutment.

Basically, the quality of the definitive reconstruction depends on the following:
- the quality of the dental implant, i.e. the appropriateness of its location and direction for accommodating the abutment;
- the design of the abutment;
- the fit of the abutment on the implant; and
- the fit of the crown or other prosthetic on the abutment.

Extensive effort has been expended in the art to improve the efficiency and the accuracy of this procedure both in the laboratory and the dentist's clinic.

For example, US 5,829,977 (Rogers et al.) published Nov. 3, 1998 and entitled "*Two-piece dental abutment*" discloses a two-piece abutment system. The first part includes a tapering inner surface which is part of a bore extending entirely through the first part. The first part includes a socket for mating with a boss or post on a dental implant. The elongated second part includes a threaded stem for engaging a threaded bore with a dental implant and a post which extends above the first part. The second part extends through the bore of the first part and is screwed into the implant. As the second part is screwed into the implant, a tapering external surface on the post of the second part frictionally locks with the tapering inner surface of the first part.

Conceptually, it would be more efficient once the implant is installed to proceed in the following order:
- Use an "Ideal Crown" (or definitive prosthesis) that is not constrained to fit a pre-fabricated abutment that may have either a wrong angle fit, or a poor design.
- Use an "Ideal Abutment" that provides both an ideal fit to the crown and an ideal fit to the implant.

The difficulties that arise in realization this concept include the following:
- The abutment is a solid one piece
- The relation between the position of the crown and the implant may vary

Document US 5,662,475 discloses an intra-implant element that fits a dental implant, an intra-crown element to be connected to a dental prosthesis and a cement for connecting the intra-crown element to the intra-implant element.

Document US 5,178,539 discloses an oblong element with a central bendable rod and two threaded portions on each ends. One that fits in a dental implant and the other that fits in an intra-crown element. The practitioner put dental cement in the in a close volume around the bendable rod.

### BRIEF SUMMARY OF THE INVENTION

It is therefore a principal object of the present invention to provide accessories to permit the dental surgeon to finalize an abutment (directly in his clinic) that ideally fits the crown as well as the implant.

It is a further object to provide accessories to permit the dental technician to make an abutment more simply as well as the prosthesis that fits on it.

It is a further object to provide accessories to permit an ideal crown or other dental prosthesis to be pre-fabricated and fitted into a patient's mouth by means of one or more abutments that are not pre-formed thus obviating the need for the dental prosthesis to be customized to the abutment as is currently required.

These objects are realized by the subject matter of claims 1 and 8. A method is further defined which is not part of the invention. The method for forming an abutment for interfacing a dental prosthesis to a dental implant or a duplicate thereof inserted into a patient's jaw or a model thereof comprises:
positioning or assuming a pre-fabricated dental prosthesis in the patient's jaw or the model thereof so that it is properly matched to the patient's dentition thus defining an unknown and arbitrary spatial disposition between the dental prosthesis and the dental implant; and
subsequently constructing an abutment to match the spatial disposition between the dental implant and the dental prosthesis.

Such a method may be realized as follows:
removably and reproducibly attaching to the dental implant or said duplicate an intra-implant element that is or may be bonded to an intra-crown element via a resilient bonding material so as to form a deformable connection between the intra-crown element and the intra-implant element;
adjusting the intra-crown element relative to the intra-implant element so as to form a model abutment that is properly adjusted to the dental implant or said duplicate and is properly positioned to receive a dental prosthesis;
removing the model abutment from the dental implant or said duplicate without deforming the model abutment; and
using the model abutment to form a permanent abutment.

Thus in accordance with the invention the abutment is formed in two parts: (a) an intra-crown element that fits the ideal dental prosthesis exactly, and (b) an intra-implant element that fits the implant exactly and can be removably and reproducibly attached thereto, for example by snap-fitting. The abutment having been thus formed, all that remains is to then connect them in an accurate mutual relation that may be dictated in the clinic by the precise positioning of the definitive prosthesis. Since the abutment according to the invention allows a pre-fabricated prosthesis to be properly suited to the abutment as opposed to hitherto proposed techniques where the preparation of the abutment must precede the construction of the prosthesis, the abutment according to the invention may and sometimes will be referred to as a "reverse abutment." In this connection, it should be noted that the term "reverse abutment" is equally applicable both to the model abutment and to the permanent abutment prepared therefrom.

The two parts of the abutment must be connected by a resilient connection that is capable of adapting itself to each case so as to ensure a joint that is properly oriented for each ideal crown and implant.

In the laboratory, the connection can be made in a first stage using a soft wax which is flexible, and then completed in a second stage by the means of a regular stable wax. In the clinic the ideal connection between the intra-crown element and the intra-implant element can be dictated by the optimal positioning of the definitive prosthesis that fits the intra-crown element, the crown being maintained in the optimal position by the means of a jig, for example.

In accordance with another aspect of the invention there is provided a kit for preparing an abutment for interfacing a dental prosthesis to a dental implant or a duplicate thereof inserted into a patient's jaw or a model thereof, the kit comprising:
a plurality of intra-implant elements each adapted for a different dental implant or duplicate; and
a plurality of intra-crown elements suited for different sizes and morphologies of teeth to be reconstructed, each of the intra-crown elements being adapted for a respective dental prosthesis and each being suited for bonding to any one of said intra-implant elements via a resilient bonding material so as to form a model abutment that is properly adjusted to a selected dental implant or said duplicate corresponding to a selected intra-implant element and is properly positioned to receive a dental prosthesis;
whereby the dental prosthesis may be secured to a permanent abutment formed from the model abutment.

Such a kit offers the technician different components useful for creating the master model of the patient's mouth and for making the abutment and the definitive prosthesis. These components are:
- one or more universal adapters, whose function is to serve as a base for permitting the positioning of an intra-crown element replicate. The external design of this base must be retentive, and the internal part designed to receive the lower part of the intra-crown element replicate.
- a plurality of intra-crown element replicates each adapted for precise fitting to the universal adapter and being configured for fitting to the intra-crown element replicate a dental prosthesis so as to properly and reproducibly locate the dental prosthesis in a model of the patient's mouth containing one or more said adapters.

One of the advantages of this technique is that it is possible to have an intra-crown element with an anatomical cross-section and contour allowing an appropriate cervical profile.

The kit may further include a plurality of intra-crown element replicates each adapted for precise fitting to the universal adapter and being configured for fitting to the intra-crown element replicate a dental prosthesis so as to properly and reproducibly locate the dental prosthesis in a model of the patient's mouth containing one or more such adapters.

The kit may further include a plurality of temporary or definitive crowns each adapted for fitting to a respective intra-crown element replicate.

When making a master model for the definitive prosthesis, the practitioner communicates to the technician the Mesio-Distal and Bucco-Lingual positions of the implant's emergence according to his treatment plan. Reasonable inaccuracies in the practitioner's estimate or in the technician's implementation of the treatment plan will be corrected by the Reverse Abutment. The technician then installs on the master cast model a replicate of the intra-crown element (chosen from the kit) fitting on an adapter which serves as a universal positioning replicate positioned according to the practitioner's treatment plan.

For making customized abutments the technician can use an intra-crown element from the kit and connect it to a machined base cylinder which is the intra-implant element. The connection can be made with a soft wax which is flexible and completed after the connection with a regular wax.

The intra-crown element can be in wax, acryl for casting, or any kind of acryl to be part of the temporary abutment, but also in porcelain, gold, non-precious metal or any other material compatible with the function of the intra-crown-element as described above.

A temporary crown can be made using a coping from the kit, which can be formed of plastics and has an internal hollow that is of complementary shape to an external contour of the appropriate intra-crown element that matches the temporary crown. The coping fits on to the intra-crown element that is part of the abutment and serves as a base for constructing thereon the temporary crown. The coping may be formed of any suitable material such as wax, acryl, gold, non-precious metal, porcelain, zirconia, alumina and any other material suitable for forming a dental prosthesis.

For making the definitive prosthesis the technician can use gold coping, non-precious coping, porcelain coping or any other coping made in a compatible material with the described method (for each intra-crown element correspond all these kind of copings).

All components in the kit described above can be obtained separately.

The intra-crown element and the intra-implant element are discrete elements that are bonded in the clinic using a resilient bonding material that allows deformation of the connection between the intra-crown element and the intra-implant element prior to attaining optimal orientation, whereupon the resilient bonding material may be strengthened either by curing, where appropriate, or by the addition of filler material. Alternatively, the resilient joint may be a deformable membrane that encloses the intra-crown element and the intra-implant element and is amenable to curing, for example, by the application of light.

Likewise, the intra-crown element and the intra-implant element may themselves contain a product, such a light cure composite (usually used in dentistry). The composite has its own elasticity before light curing and permits to adapt the relation of the future crown and the implant through its fitting on the intra-crown element of the reverse abutment.

As noted above, a jig may be used to maintain the crown in the ideal location for dictating the position of the abutment.

Once the reverse abutment is well fitted into the implant and the crown is well fitted on the abutment so that its position is definitely accurate, it is possible to light cure the composite (either directly or through a prepared path on the intra-crown element and the crown) and obtain a solid one-piece abutment that is perfectly adapted both to the implant and to the ideal crown (accomplished without any constraint originating from the abutment position).

Another option is to use a composite contained in a plastic membrane, position it between the intra-implant element and the intra-crown element and then light cure it.

If the practitioner decides to use the cast technique, once the reverse abutment is deposed, he has to create in a second phase, a way to spiral it to the implant and to finish the interface between the abutment and the gum.

Should the practitioner decide to receive an abutment manufactured by CAM he will have to scan the connected elements. In this case, there is no need for the technician to create a way to screw it on the implant since the CAD/CAM system will automatically create a screw thread for screwing the abutment to the implant.

Another possibility is to obtain the definitive connection in the clinic, for example, between a gold or porcelain intra-crown element and compatible base cylinder fitting on the implant.

The invention also takes into account that different manufacturers produce implants of different dimensions such that it may be possible to use the implant of one manufacturer with a coping of another manufacturer and an intra-crown element according to the invention that is of complementary form. Should the technician decide to make a regular custom abutment (without using the preparation abutment kit), working with a CAD/CAM system, it is possible to receive a customized intra-crown element replicate, a customized intra-crown element or coping in titanium, zirconium or any other material compatible for working with a specific manufacturer. In this case the positioning replicate must be like the original implant analog delivered by the implant manufacturer.

Using an appropriate scanning and a CAD/CAM system it is possible to produce:
- the permanent abutment, whose form can be replicated by scanning after the two connected elements of the model abutment are scanned;
- the ideal temporary and definitive crowns with the internal preparation that fits the ideal abutment;
- the intra-crown element of the reverse abutment;
- the coping of the future crown that fits intra-crown element of the reverse abutment.

The different stages corresponding to the appropriate scanning and CAD/CAM system are:
- At the clinic the dental surgeon has to take an impression of the upper and lower jaw, measure the gum height and estimate the Mesio-Distal and Bucco-Lingual positions of the implant and abutment as well as their future angulations;

Further to this, four possibilities present themselves:
(i) The impressions are invested and prepared as said above including the chosen positioning replicate, following which the technician builds a wax model of the ideal prosthesis including the ideal relations with the gum and then scans it.
(ii) The master model is prepared according to (i), then the technician positions the machined base cylinder on the positioning replicate and applies wax on it in order to make the model of the ideal intra-crown element;
(iii) Once the impressions are prepared according to (i) they are directly scanned and the relation between them is recorded;
(iv) An optical impression is taken or either the upper and lower jaws are directly scanned using other technologies, and the relation between them is also recorded.

Next, by the means of a CAD/CAM system and appropriate software the following components can be manufactured:
- the prosthesis that corresponds to the external contour carved by the technician or the infrastructure corresponding to this external contour, permitting design and manufacture of the intra-crown element replicate, the intra-crown element or the ideal reverse abutment that fits the element(s) of the prosthesis supported by an implant according to (i).
- the intra-crown element replicate, the intra-crown element, the copings that fit on the replicate that allows the technician to make the temporary and the definitive prostheses according to (ii).
- the crown or bridge and the intra-crown element(s) of the abutment(s) corresponding to the implant(s), according to(ii) and(iii), requiring the technician to design the future prosthesis on the computer (this can be easily done by inverting the symmetric tooth if it exists on the scanned model).

Further features and advantages of the invention will be apparent from the description below.

### BRIEF DESCRIPTION OF THE DRAWINGS

In order to understand the invention and to see how it may be carried out in practice, some preferred embodiments will now be described, by way of non-limiting example only, with reference to the accompanying drawings, in which:
**Fig. 1** is a pictorial representation illustrating the position of the ideal crown related to the opposite tooth and the soft tissue ideally positioned;
**Figs. 2a and 2b** are pictorial representations illustrating an abutment that is prepared according to the invention;
**Fig. 3** is a pictorial representation illustrating a modification to the abutment shown in Fig. 2 by adding mechanical reinforcements;
**Fig. 4** is a pictorial representation illustrating a modification to the abutment shown in Fig. 2 by adding mechanical reinforcements that make the abutment stronger as well as more flexible;
**Figs. 5a to 5e** show pictorially different components that may be used to prepare the abutment shown in Fig. 2 and a dental prosthesis therefor;
**Fig. 6** shows pictorially a perspective view of a universal adapter and intra-crown element replicate shown in Fig. 5.
**Fig. 7** is a pictorial representation illustrating a method for preparing a crown for fitting to a naturally devitalized tooth via an intra-crown element;
**Figs. 8a and 8b** are pictorial representations illustrating details of the crown and enclosed intra-crown element shown in Fig. 6 in accordance with an embodiment of the invention; and
**Fig. 9** is a pictorial representation illustrating a method for forming a base of a dental prosthesis for attaching to a dental implant or a duplicate thereof.

### DETAILED DESCRIPTION OF EXEMPLARY EMBODIMENTS

In the following description of some preferred embodiments of the invention, identical or equivalent components that appear in more than one figure will be referred to by the same reference numerals. It should also be understood that while the following embodiments are described with regard to the preparation of an abutment for a crown, the same principles apply to the preparation of abutments for supporting other dental prostheses. Likewise, since it is known that a dental prosthesis may be a bridge that replicates more than one tooth, the term "dental prosthesis" as used herein is not to be understood as limited to a single tooth or crown.

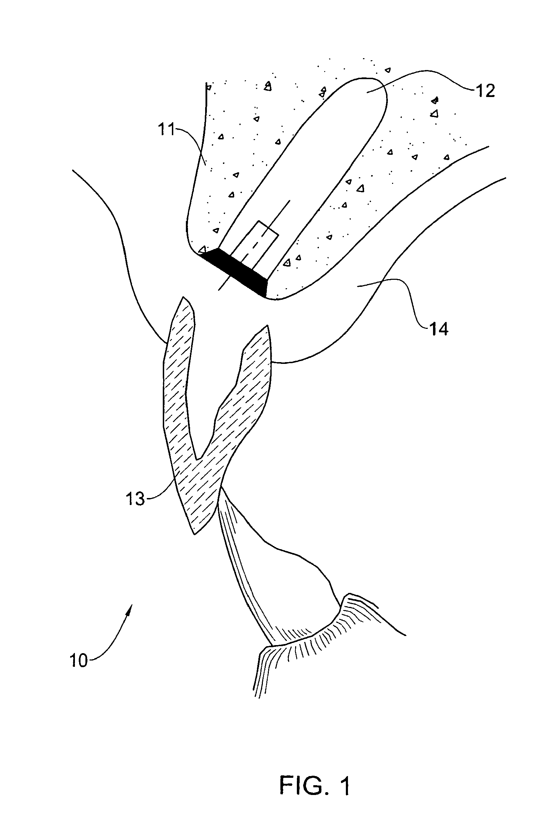

Fig. 1 shows pictorially a detail of a patient's mouth shown generally as 10 having an upper jaw 11 in which a dental implant 12 is inserted. An ideal crown 13, so called because it is prepared and positioned to match the patient's dentition, is positioned so that its rear end is concealed behind the patient's gums 14. Once this is done, the spatial disposition between the dental implant 12 and the ideal crown 13 defines an unknown and arbitrary relationship that must be maintained in order to realize the ideal crown esthetically and functionally.

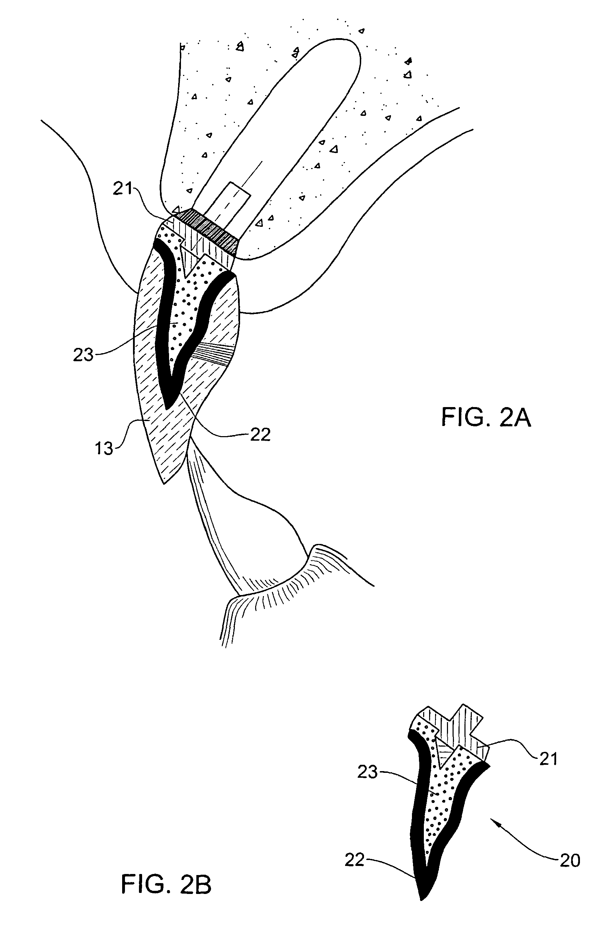

The invention allows this unknown and arbitrary relationship to be maintained by providing an abutment 20 (shown in Fig. 2) that is prepared to match perfectly the spatial disposition between the dental implant 12 and the ideal crown 13 after the crown 13 is positioned. As noted above, this is the very reverse of what is conventionally done where the abutment is constructed first and only then is the crown or other prosthesis supported thereon.

It should be noted that the techniques according to the invention are applicable for use in both the dental clinic where rehabilitation is performed by the dental practitioner on the patient and also in the laboratory where a dental technician uses a model to prepare the abutment. In the clinic, the abutment supports the pre-fabricated dental prosthesis on the dental implant in the patient's jaw. In the laboratory, the dental prosthesis need not yet be fabricated and the technician works with a model of the patient's jaw prepared from an impression to construct the abutment based on experience and know-how to provide a best fit in relation to adjacent teeth to support the ideal dental prosthesis that will be made later. Thus, in the laboratory, the abutment is typically constructed on a duplicate of the dental implant in a model of the patient's jaw to support an imaginary dental prosthesis whose location on the abutment is assumed. Alternatively, the technician can construct from wax, for example, a mockup of the future dental prosthesis to visualize the position and form of the future dental prosthesis. He then takes an impression of the wax mockup using a pliable material such as silicon so as to create a key that defines the contour of the dental prosthesis. The wax mockup is then removed and the abutment is constructed within the confines of the key.

Figs. 2a and 2b are pictorial representations illustrating a model abutment 20 that is prepared according to the invention as follows. An intra-implant element 21 is removably and reproducibly attached to the dental implant 12 or, in the case of laboratory reconstruction, its duplicate. This may be achieved by snap-fitting the intra-implant element 21 to the dental implant 12 so that the two components are mated precisely, while allowing removal of the intra-implant element 21 from the dental implant 12 and its subsequent and exact reconnection thereto. The intra-implant element 21 is bonded to an intra-crown element 22 via a resilient bonding material 23 so as to form a deformable connection between the intra-crown element 22 and the intra-implant element 21. The intra-crown element 22 is now adjusted relative to the intra-implant element 21 so as to form the model abutment 20 that is properly adjusted to the dental implant or the duplicate and is properly positioned to receive a dental prosthesis.

It is important that removal of the model abutment 20 from the dental implant 12 or duplicate does not deform the model abutment. In the laboratory this may be feasible by relying on the finesse of the technician. In the clinic the connection may need to be strengthened prior to removal of the abutment. To this end, the resilient bonding material 23 may be light curable so that when the model abutment 20 is ideally positioned, the resilient bonding material 23 may be hardened by directing light on to the connection. Alternatively, the resilient bonding material 23 may be formed of a chemical bond that becomes hard after several minutes, thus requiring the practitioner or technician to work within the required curing time. Additionally or alternatively, the resilient joint may include a mechanical connection that is amenable to bending, elongation and compression similar to an accordion so as to allow the intra-crown element 22 to be adjusted relative to the intra-implant element 21.

The model abutment 20 is then removed from the dental implant or duplicate, and is then used to form a permanent abutment. This may be achieved directly using the model abutment by forming the intra-crown element and the intra-implant element of a durable material, and rendering permanent the connection between the intra-crown element and the intra-implant element in the model abutment. One way to render the connection permanent is to add filler material such as metal or porcelain which can be worked to provide a smooth external surface of proper form. In such case, the intra-implant element and the intra-crown element are maintained in proper mutual disposition, the cured or otherwise hardened resilient bonding material is removed, and the volume filled with a required material or compound to form the definitive connection. Alternatively, the permanent abutment can be formed using the model abutment as a template, possibly after finishing, using known techniques such as CAD/CAM and the like.

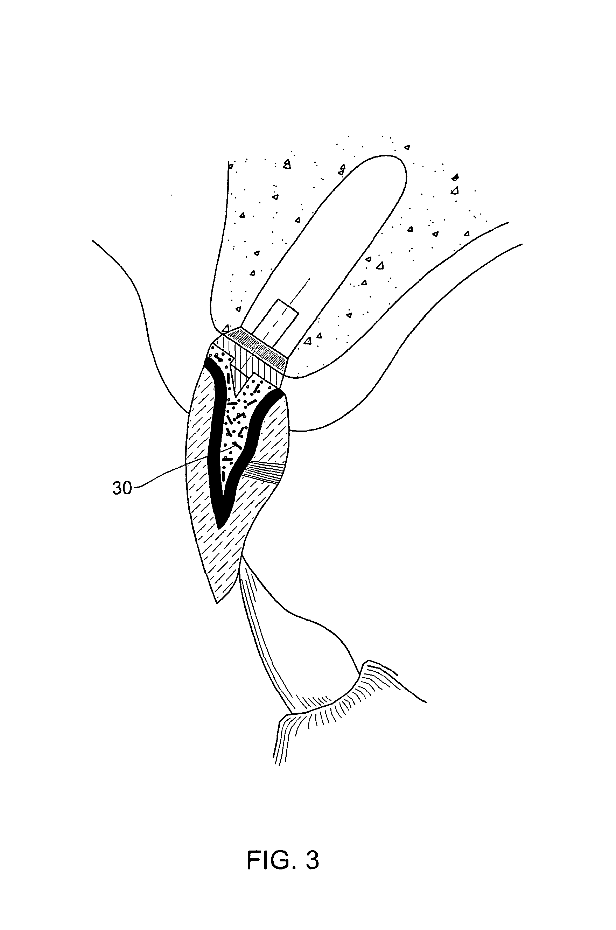

Fig. 3 is a pictorial representation illustrating a modification to the abutment shown in Fig. 2 wherein the abutment is reinforced by means of mechanical reinforcements 30.

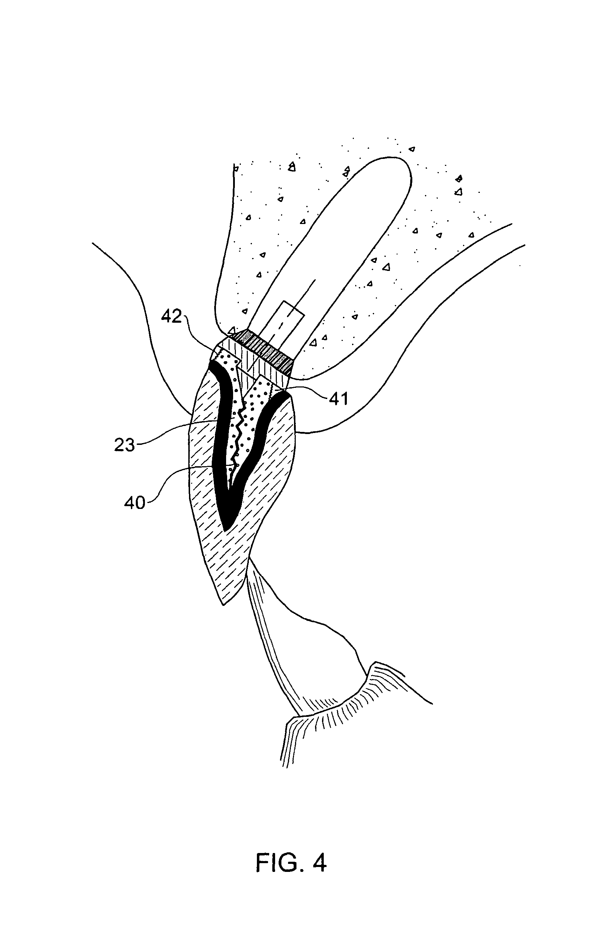

Fig. 4 is a pictorial representation illustrating a modification to the abutment 20 shown in Fig. 2 by adding deformable reinforcements 40 that strengthen the abutment while maintaining its flexibility. The resilient bonding material 23 is provided in the form of a globule 41 having a pliable membrane 42 formed of an elastic material that contains resilient composite therein whose form may be matched to an internal contour of the intra-crown element 22 and to an external contour of the intra-implant element 21. The reinforcements 40 are designed to permit elongation and rotation of the abutment before light curing the composite maintained by the membrane 42.

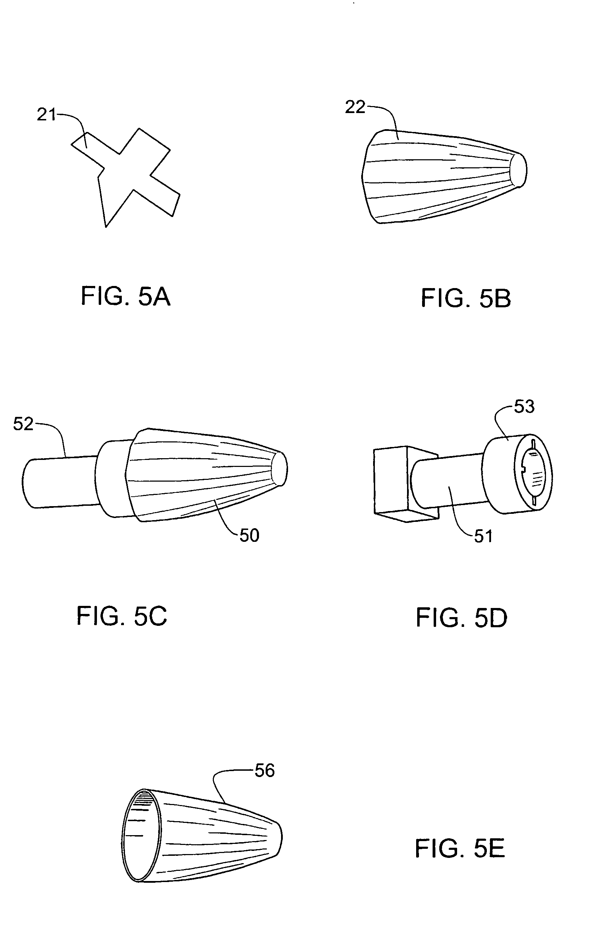

Figs. 5a to 5e show pictorially different components that may be used to prepare the abutment 20 and allow for the fabrication of a dental prosthesis that is suited for fitting via the abutment to a dental implant embedded in the patient's jaw. The components may be provided singly or in kit form and include a plurality of intra-implant elements 21 each adapted for removably and reproducibly attaching to a different dental implant or duplicate. The kit further includes a plurality of intra-crown elements 22 suited for different sizes and morphologies of teeth to be reconstructed, and each being adapted for a respective dental prosthesis. The intra-crown elements 22 are configured for bonding to any one of the intra-implant elements 21 via a resilient bonding material so as to form a model abutment that is properly adjusted to a selected dental implant or duplicate corresponding to a selected intra-implant element and is properly positioned to receive a dental prosthesis.

In order that the dental prosthesis may fit properly on to the abutment formed as described above, the dental prosthesis must be pre-fabricated in the laboratory so that when it is situated in the patient's mouth, the dental practitioner can create a reverse abutment that is ideally suited to the dental prosthesis. This requires the dental technician to be able to pre-fabricate a dental prosthesis that is suited for fitting via an abutment to a dental implant without requiring precise knowledge of a location and orientation of the dental implant in a patient's mouth. To this end, the kit further includes a plurality of intra-crown element replicates 50 each adapted for precise fitting to a respective adapter 51 and being configured for fitting to the intra-crown element replicate a dental prosthesis so as to properly and reproducibly locate the dental prosthesis in a model of the patient's mouth containing one or more adapters 51.

The kit may further including a plurality of copings 56 shown pictorially in Fig. 5e and each having an internal hollow that is of complementary shape to an external contour of a respective one of the intra-crown elements 22. The coping may be formed of wax, acryl, gold, non-precious metal, porcelain, zirconia, alumina and any other material suitable for forming a dental prosthesis. The kit may also include a plurality of temporary crowns each adapted for fitting to a respective intra-crown element replicate. Likewise, a plurality of porcelain crowns may be provided each adapted for fitting to a respective intra-crown element replicate 50 and serving as a base for an ideal prosthesis by post modification.

A procedure for forming a pre-fabricated dental prosthesis that is suited for fitting via an abutment to a dental implant will now be described. A model of the patient's mouth is formed having embedded therein an adapter 51 that is configured for removably fitting thereto an intra-crown element replicate 50. The adapter 51 is effectively molded within the model by forming a bore or recess that is sufficiently large to accommodate the adapter, and which after insertion of the adapter therein, is then filled with plaster compound that is allowed to set hard. By such means, the adapter 51 may be accommodated in the model in a position that approximates to the actual position of the dental implant in the patient's jaw although the exact position and orientation of the dental implant is neither known nor important.

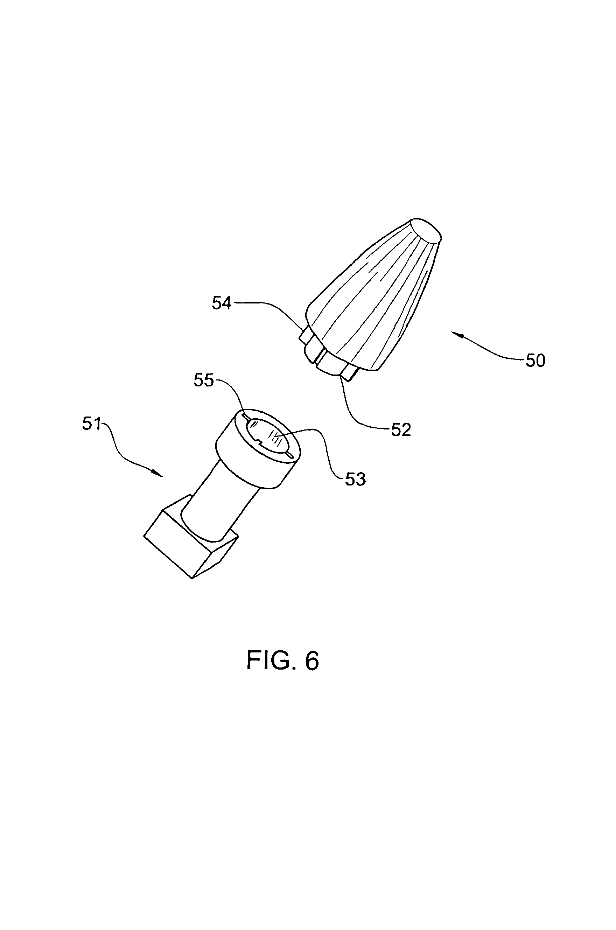

Fig. 6 shows pictorially a perspective view of the adapter 51 and intra-crown element replicate 50 shown in Fig. 5. The intra-crown element replicate 50 has a pin 52 that is adapted for precise fitting to an internal bore 53 of the adapter 51 by means of external geometric protrusions 54 that engage corresponding internal recesses 55 in the adapter. The length of the pin 52 is such that when intra-crown element replicate 50 is fully inserted into the bore 53 of the adapter 51, the protrusions 54 engage the internal recesses in the adapter, possibly with a snap fit. By such means, when a dental prosthesis is fitted on to the intra-crown element replicate, it may be ensured that the dental prosthesis will be properly and reproducibly located in the model of the patient's mouth. It will appreciated that the same result may be achieved by a pin that protrudes upwardly from the adapter to engage a correspond bore in the intra-crown element replicate.

In respect of a dental prosthesis that is to be pre-fabricated, a respective intra-crown element replicate 50 is inserted into a respective adapter, and is used as a template for forming a dental prosthesis that may subsequently be fitted on to an abutment prepared according to the invention as described above with particular reference to Figs. 2 and 3 of the drawings.

As an alternative to pre-fabricating the dental prosthesis in the laboratory, there may be created *in situ* in the model of the patient's jaw an imitation dental prosthesis of each dental prosthesis that is to be pre-fabricated or an imitation infrastructure thereof on which the dental prosthesis can be subsequently constructed. A 3-D computer construction of each imitation dental prosthesis or imitation infrastructure is then generated and used to generate the dental prosthesis or the respective infrastructure thereof from which the dental prosthesis may be formed. The 3-D computer construction may also be used to generate a respective intra-crown element for preparing an abutment that is suited to the dental prosthesis and be formed according to the invention as described above with particular reference to Figs. 2 and 3 of the drawings.

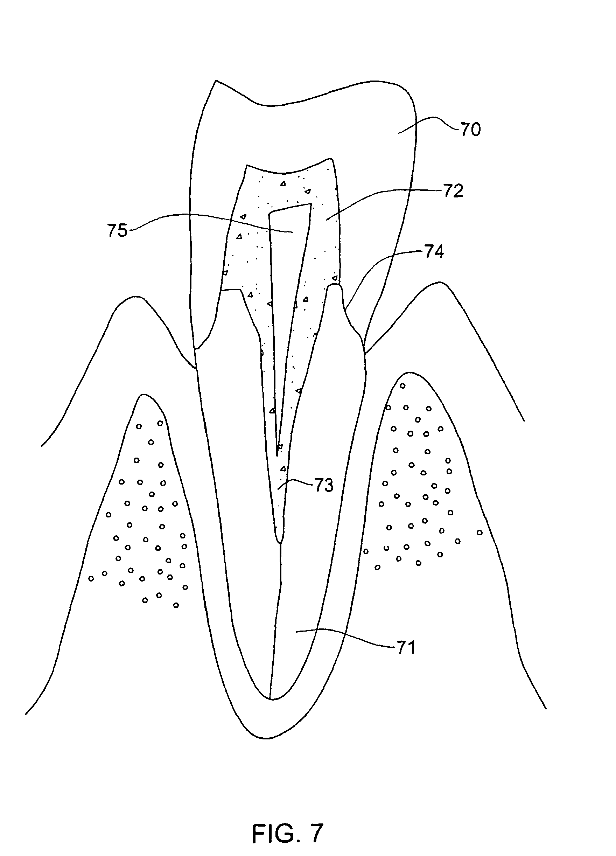

Fig. 7 is a pictorial representation illustrating a method for preparing a crown 70 for fitting to a naturally devitalized tooth 71 via an intra-crown element 72 in accordance with an application of the present invention. An accurate model is made of the tooth 71 and associated root canal 73 or root canals. The model is then used to prepare the crown 70 being properly matched to a remaining peripheral contour 74 of the tooth so that the crown may subsequently be supported on one or more posts 75 cemented within respective root canals 73 of the tooth 71.

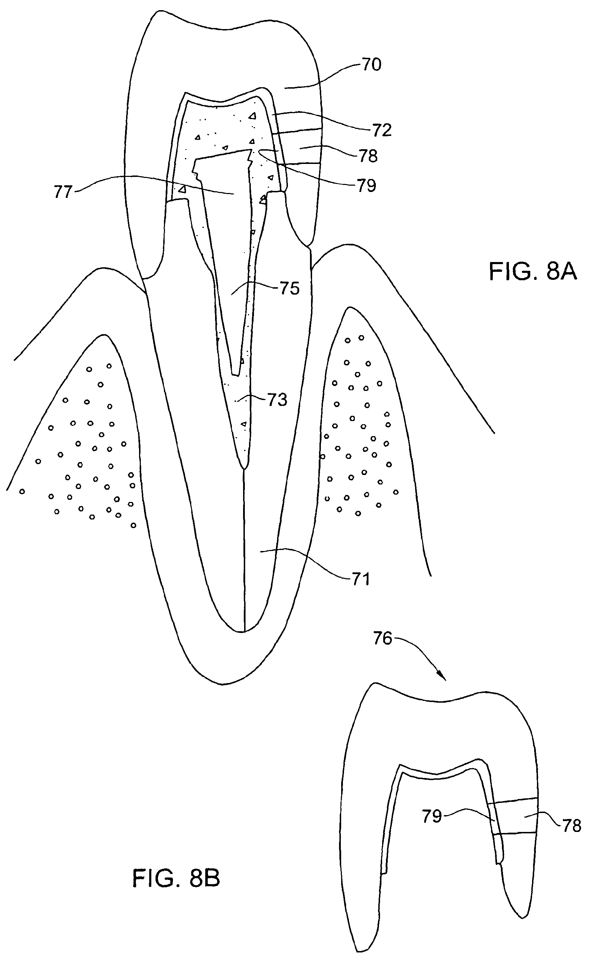

Figs. 8a and 8b are pictorial representations illustrating a detail of the crown 70 and enclosed intra-crown element 72 shown in Fig. 7. The crown 70 is bonded to the intra-crown element 72 so as to form a combined crown and intra-crown element 76 that may subsequently be supported on one or more posts 75 cemented within respective root canals 73 of the tooth. The crown 70 is pre-fabricated and the intra-crown element 72 is part of the kit described above, thus allowing the combined crown and intra-crown element 76 to be prepared in advance by a dental technician. In the dental clinic, an outer surface of the tooth 71 is prepared for receiving the crown 70 and filling the combined crown and intra-crown element 76 with composite 77. The combined crown and intra-crown element 76 is then positioned over the posts 75, any surplus composite is removed, and the composite is cured. Once this is done, the crown 70 is effectively supported via an abutment that is reinforced by the post 75 and is formed of two parts: namely, the intra-crown element 72 and the reinforced composite 77 whose external contour is exactly matched to the internal contour of the crown 70 via the intra-crown element 72. Thus, the invention allows for a pre-fabricated crown to be ideally matched to the tooth 71 via a reverse abutment that is prepared after the crown is formed and is exactly matched to the crown via the intra-crown element.

One way to remove the surplus composite will now be described. In the crown 70 there is formed a bore 78 that is aligned with a corresponding aperture 79 in the intra-crown element 72. The bore and aperture are located according to predetermined esthetic and functional requirements so that, in use, they are hidden from view. The bore 78 and aperture 79 serve as a window for directing light therethrough for curing the composite 77 within the combined crown and intra-crown element 76.

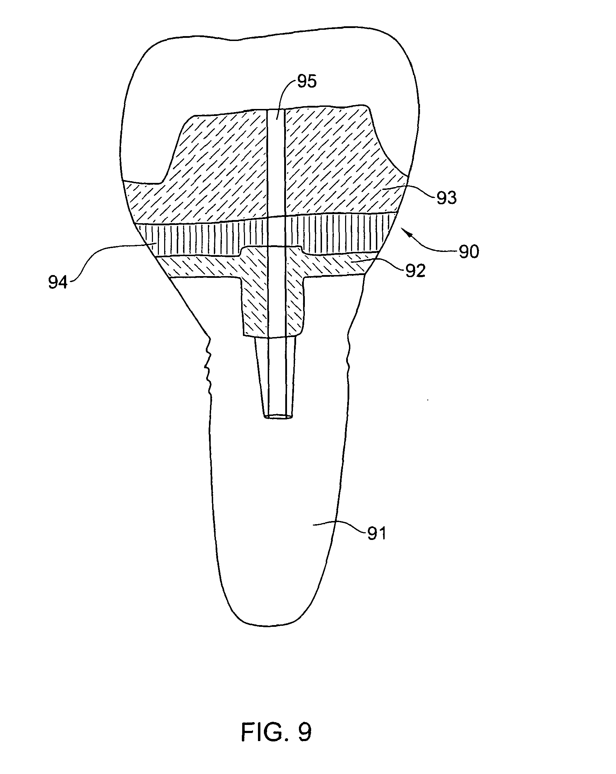

Fig. 9 is a pictorial representation illustrating a method for forming a base 90 of a dental prosthesis for attaching to a dental implant 91 or a duplicate thereof in accordance with an application of the present invention.

An intra-implant element 92 is removably and reproducibly attached to the dental implant 91 or the duplicate. The intra-implant element 92 is or may be bonded to an intra-crown element 93 via a resilient bonding material 94 so that the base 90 formed thereby has a deformable connection between the intra-crown element 93 and the intra-implant element 92. The intra-crown element 93 is adjusted relative to the intra-implant element 92 so that the base 90 is properly adjusted to the dental implant 91 or its duplicate and is properly positioned to receive a dental prosthesis. The connection between the intra-crown element 93 and the intra-implant element 92 is strengthened so that removal of the base 90 from the dental implant 91 or its duplicate does not deform the base, which is then removed from the dental implant or its duplicate. The connection between the intra-implant element 92 and the intra-crown element 93 is then perfected, and the base 90 is then used to form a permanent base for supporting the dental prosthesis.

The permanent base may be provided with a bore 95 for accommodating a screw therethrough so that the base may be screwed to the dental implant 91 prior to fixing the dental prosthesis.

## Claims

1. A kit for preparing an abutment (20) for interfacing a dental prosthesis to a dental implant or a duplicate thereof inserted into a patient's jaw or a model thereof, the kit comprising the following components:
a plurality of intra-implant elements (21) each adapted for removably and reproducibly attaching to a different dental implant (12) of duplicate; and
a plurality of intra-crown elements (22) suited for different sizes and morphologies of teeth to be reconstructed, each of the intra-crown elements (22) being adapted for a respective dental prosthesis and each being suited for bonding to any one of said intra-implant elements (21) via a resilient bonding material as to form a model abutment that is properly adjusted to a selected dental implant (12) or said duplicate corresponding to a selected intra-implant element (21) and is properly positioned to receive a dental prosthesis;
whereby the dental prosthesis may be secured to a permanent abutment formed from the model abutment,
the kit further including a globule (41) of resilient bonding material contained within a pliable membrane (42) that permits the resilient bonding material to be matched to an internal contour of the intra-crown element and to an external contour of the intra-implant element.

2. The kit of claim 1, further including a plurality of copings each having an internal hollow that is of complementary shape to an external contour of a respective one of the intra-crown elements.

3. The kit of claim 1 or 2, further including a plurality of temporary crowns each adapted for fitting to a respective intra-crown element replicate.

4. The kit of claim 1, 2 or 3, further including a plurality of porcelain crowns each adapted for fitting to a respective intra-crown element replicate and serving as a base for an ideal prosthesis by post modification.

5. The kit of claim 1, further comprising at least one of a plurality of adapters (51) each configured for fitting thereto an intra-crown analog (50).

6. The kit of claim 5, wherein said at least one of a plurality of adapters comprises at least one adapter with a male connection for fitting into a female connector within the intra-crown element analog.

7. The kit of claim 5, wherein said at least one of a plurality of adapters comprises at least one adapter with a female connection for accommodating therein a male connector fitted to the intra-crown element analog.

8. Means for forming an abutment (20) for interfacing a dental prosthesis to a dental implant or to a dental implant analog, said means comprising:
- an intra-implant element (21) that fits the dental implant (12) or the dental implant analog;
- an intra-crown element (22) to be connected to the dental prosthesis;
- a resilient connection (23) for connecting the intra-crown element (22) to the intra-implant element (21), said resilient connection (23) comprising a globule (41) of resilient bonding material contained within a pliable membrane (42) that permits the resilient bonding material to be matched to an internal contour of the intra-cgovun element and to an external contour of the intra-implant element, said resilient
bonding material forming a deformable connection,
wherein the intra-crown element and the intra-implant element are discrete elements.

9. The means of claim 8, wherein the resilient bonding material is selected from a group of materials including:
a) light-curable composite,
b) chemical bond that becomes hard after several minutes.

10. The means of claim 8, wherein the resilient connection (23) includes mechanical reinforcements (30) within the resilient bonding material.

## Patentansprüche

1. Kit zur Herstellung eines Abutments (20) zur Verbindung einer Zahnprothese und eines in den Kiefer eines Patienten oder in ein Modell des Kiefers eingesetzten Dentalimplantats oder Duplikats desselben, umfassend die folgenden Komponenten:
- eine Vielzahl von Implantats-Innenelementen (21), von denen jedes zur ablösbaren und reproduzierbaren Befestigung an ein bestimmtes Dentalimplantat (12) oder Duplikat geeignet ist; und
- eine Vielzahl von für verschiedene Größen und Morphologien der zu rekonstruierenden Zähne vorgesehenen Kronen-Innenelementen (22), wobei jedes Kronen-Innenelement (22) für jeweils eine Zahnprothese vorgesehen ist und jeweils zur Bindung an eines der Implantats-Innenelemente (21) mittels eines verformbaren Bindematerials geeignet ist, um ein Modell-Abutment zu bilden, das genau auf ein bestimmtes Dentalimplantat (12) oder auf das Duplikat, welches einem bestimmten Implantats-Innenelement (21) entspricht, abgestimmt ist und das richtig zur Aufnahme der Zahnprothese platziert ist;
wobei die Zahnprothese an ein aus einem Modell-Abutment gebildeten, dauerhaften Abutment befestigt werden kann,
wobei der Kit zusätzlich ein Kügelchen (41) eines in einer formbaren Membran (42) enthaltenen, verformbaren Bindematerials umfasst, wobei die Membran zulässt, dass das verformbare Bindematerial an ein inneres Profil des Kronen-Innenelementes und an ein äußeres Profil des Implantats-Innenelementes anpassbar ist.

2. Kit nach Anspruch 1, zusätzlich umfassend eine Vielzahl von Abdeckungen, von denen jede eine innere Aushöhlung mit einer zu einem äußeren Profil eines entsprechenden Kronen-Innenelementes komplementären Form aufweist.

3. Kit nach Anspruch 1 oder 2, zusätzlich umfassend eine Vielzahl provisorischer Kronen, von denen jede zum Anbringen an ein entsprechendes Replikat eines Kronen-Innenelementes geeignet ist.

4. Kit nach Anspruch 1, 2 oder 3, zusätzlich umfassend eine Vielzahl von Porzellan-Kronen, von denen jede zum Anbringen an ein entsprechendes Replikat eines Kronen-Innenelementes geeignet ist und als Basis für eine ideale Prothese durch nachträgliche Modifizierung dient.

5. Kit nach Anspruch 1 zusätzlich umfassend zumindest einen aus einer Vielzahl von Adaptern (51), von denen jeder als Anschlussteil zu einem Kronen-Innen-Analogon (50) ausgebildet ist.

6. Kit nach Anspruch 5, wobei der zumindest eine aus einer Vielzahl von Adaptern zumindest einen Adapter mit einem männlichen, in ein weibliches Anschlussteil innerhalb des Kronen-Innenelement Analogons passenden Anschlussstück umfasst.

7. Kit nach Anspruch 5, wobei der zumindest eine aus einer Vielzahl von Adaptern zumindest einen Adapter mit einem weiblichen Anschlussteil zur Aufnahme eines männlichen Anschlussstückes am Kronen-Innenelement Analogon umfasst.

8. Mittel zur Bildung eines Abutments (20) zur Verbindung einer Zahnprothese und eines Dentalimplantats oder eines Dentalimplantat-Analogons, umfassend
- ein dem Dentalimplantat (12) oder dem Dentalimplantat-Analogon angepasstes Implantats-Innenelement (21);
- ein mit der Zahnprothese zu verbindendes Kronen-Innenelement (22);
- eine das Kronen-Inennelement (22) mit dem Implantats-Inennelement (21) verbindende verformbare Verbindung (23), wobei die verformbare Verbindung (23) ein Kügelchen (41) eines in einer formbaren Membran (42) enthaltenen, verformbaren Bindematerials umfasst, wobei die Membran zulässt, dass das verformbare Bindematerial an ein inneres Profil des Kronen-Innenelementes und an ein äußeres Profil des Implantats-Innenelementes anpassbar ist, wobei das verformbare Bindematerial eine verformbare Verbindung ausbildet und wobei das Kronen-Innenelement (22) und das Implantats-Innenelement (21) separate Teile darstellen.

9. Mittel nach Anspruch 8, wobei das verformbare Bindematerial ausgewählt ist aus einer Gruppe von Materialien umfassend:
a) lichthärtbare Verbundwerkstoffe,
b) chemische Verbindung, welche nach einigen Minuten aushärtet.

10. Mittel nach Anspruch 8, wobei die verformbare Verbindung (23) mechanische Verstärkungen (30) in dem verformbaren Bindematerial umfasst.

## Revendications

1. Nécessaire pour la préparation d'un pilier (20) de connexion d'une prothèse dentaire à un implant dentaire ou à un duplicata de cet implant inséré dans la mâchoire d'un patient ou d'un modèle de cette dernière, le nécessaire comprenant les composants suivants:
- une pluralité d'éléments intra-implant (21) chacun adapté pour la fixation amovible et reproductible à un implant dentaire différent (12) ou un duplicata, et
- une pluralité d'éléments intra-couronne (22) adaptés pour différentes morphologies et grandeurs de dents à reconstruire, chacun des éléments intra-couronne (22) étant adapté à une prothèse dentaire respective et chacun étant adapté pour être lié à n'importe quels desdits éléments intra-implant (21) par le biais d'un matériau de liaison résilient afin de former un pilier modèle qui est correctement ajusté à un implant dentaire sélectionné (12) ou ledit duplicata correspondant à un élément intra-implant sélectionné (21) et est correctement positionné pour recevoir une prothèse dentaire;
en ce que la prothèse dentaire peut être fixée à un pilier permanent formé à partir du pilier modèle;
le nécessaire incluant encore un globule (41) d'un matériau de liaison résilient contenu au sein d'une membrane souple (42) qui permet au matériau de liaison résilient d'épouser un contour intérieur de l'élément intra-couronne et un contour extérieur de l'élément intra-implant.

2. Nécessaire selon la revendication 1, incluant en outre une pluralité de coiffes, chacune ayant une cavité intérieure de forme complémentaire au contour externe d'un des éléments intra-couronne respectif.

3. Nécessaire selon les revendications 1 ou 2, incluant en outre une pluralité de couronnes temporaires, chacune adaptée pour être montée sur une réplique respective d'un élément intra-couronne.

4. Nécessaire selon les revendications 1, 2, ou 3, incluant en outre une pluralité de couronnes en porcelaine, chacune adaptée pour être montée sur une réplique respective d'un élément intra-couronne et servant comme base pour une prothèse idéale par modification ultérieure.

5. Nécessaire selon la revendication 1, incluant en outre au moins un parmi une pluralité d'adaptateurs (51), chacun configuré pour y monter une intra-couronne analogue (50).

6. Nécessaire selon la revendication 5, **caractérisé en ce que** ledit adaptateur comprend au moins un adaptateur avec une connexion mâle pour s'assembler avec un connecteur femelle au sein de l'élément intra-couronne analogue.

7. Nécessaire selon la revendication 5, **caractérisé en ce que** ledit adaptateur comprend au moins un adaptateur avec une connexion femelle pour s'assembler avec un connecteur mâle monté sur l'élément intra-couronne analogue.

8. Moyen pour former un pilier (20) pour la connexion d'une prothèse dentaire à un implant dentaire ou à un implant dentaire analogue, ledit moyen comprenant:
- un élément intra-implant (21) qui s'adapte à l'implant dentaire (12) ou à l'implant dentaire analogue;
- un élément intra-couronne (22) à connecter à la prothèse dentaire;
- une connexion résiliente (23) pour relier l'élément intra-couronne (22) à l'élément intra-implant (21), ladite connexion résiliente (23) comprenant un globule (41) d'un matériau de liaison résilient contenu au sein d'une membrane souple (42) qui permet au matériau de liaison résilient d'épouser un contour intérieur de l'élément intra-couronne et un contour extérieur de l'élément intra-implant, ledit matériau de liaison résilient formant une connexion déformable, dans laquelle l'élément intra-couronne et l'élément intra-implant sont des éléments discrets.

9. Moyen selon la revendication 8, dans laquelle le matériau de liaison résilient est sélectionné parmi un groupe de matériau incluant:
a) un composite photo-polymérisable,
b) une liaison chimique qui devient dur après quelques minutes.

10. Moyen selon la revendication 8, dans laquelle la connexion résiliente (23) inclut des renforts mécaniques (30) au sein du matériau de liaison résilient.
